# EUROPÄISCHE PATENTANMELDUNG

(11) **EP 3 450 076 A1**
(43) Veröffentlichungstag der Anmeldung: **06.03.2019**
(21) Anmeldenummer: 17020385.5
(22) Anmeldetag: 28.08.2017
(51) Int. Cl.: B23K 9/167, B23K 9/28, B65H 5/06, B65H 51/04, B65H 51/30, B23K 9/133, B23K 3/06

(54) **HANDGEHALTENER SCHWEISSDRAHTHALTER**

(71) Anmelder: Linde Aktiengesellschaft, 80331 München (DE)
(72) Erfinder: Hammerdinger, Michael, 83342 Tacherting (DE); Schuhbeck, Markus, 83308 Trostberg (DE)
(74) Vertreter: Meilinger, Claudia Sabine

(57) **Zusammenfassung**

Die Erfindung betrifft einen handgehaltenen Schweißdrahthalter (1) für die automatische Zuführung eines Schweißdrahtes (4), umfassend wenigstens ein Gehäuse (2) mit wenigstens einer Durchführung (3) für einen Draht (4) und wenigstens einen im Gehäuse (2) befindlichen Drahtantrieb, um den Draht (4) durch die wenigstens eine Durchführung (3) zu bewegen. Weiterhin betrifft die Erfindung ein Verfahren zum Wolframinertgasschweißen und ein Schweißdrahtzuführungssystem.

## Beschreibung

Die Erfindung betrifft einen handgehaltenen Schweißdrahthalter, ein Verfahren zum Wolframinertgasschweißen und ein Schweißdrahtzuführungssystem.

### Stand der Technik

Sind qualitativ hochwertige Nähte gefordert, wird von den Lichtbogenschweißverfahren vorzugsweise das Wolfram-Inert-Gas-Schweißen eingesetzt. Mit diesem Verfahren lassen sich spritzerfrei Nähte hoher Schweißnahtgüte erzeugen. Allerdings ist die erreichbare Schweißgeschwindigkeit im Vergleich zu anderen Lichtbogenschweißverfahren sehr viel geringer. Die erreichbare Schweißgeschwindigkeit beim manuellen WIG-Schweißen hängt in hohem Maße ab von der jeweiligen Schweißposition und der Handfertigkeit des Schweißers und liegt bei etwa 0,2 m/min.

Beim WIG-Schweißen liegt der Minuspol der Schweißstromquelle an der Wolframelektrode an. Parallel zur Elektrode strömt das Inertgas aus der Gasdüse. Es erzeugt die für den Lichtbogen notwendigen Ladungsträger und schützt die Schweißnaht vor Oxidation. Der Lichtbogen wird zwischen Elektrode und Werkstück gezündet, die elektrische Energie aus der Stromquelle wird zum Teil in Wärmeendergie umgewandelt. Das Material schmilzt auf, und es wird ein Schweißbad erzeugt. Ein für die Schweißnaht notwendiger Zusatzwerkstoff wird manuell hinzugegeben. Er schmilzt ebenfalls im Lichtbogen auf und verbindet sich mit dem Schweißbad, das anschließend die Schweißnaht bildet. In der Regel wird der notwendige Zusatzwerkstoff in Form eines Schweißdrahtes zugeführt, der von dem Schweißer mittels eines handgehaltenen Schweißdrahthalters gehalten wird. Der Schweißdrahthalter umfasst in der Regel wenigstens ein Gehäuse mit wenigstens einer Durchführung für einen Draht. Da der Schweißdraht aus dem handgehaltenen Schweißdrahthalter hervorsteht, kann der Schweißer ihn mittels des Schweißdrahthalters in die Schweißstelle halten, wo er dann im Lichtbogen aufschmelzen und sich mit dem Schweißbad verbinden kann.

Durch den Lichtbogen wird das Material aufgeschmolzen. Damit besitzt das Schweißbad eine bestimmte Temperatur oberhalb der Schmelztemperatur des Werkstoffs; sie kann bei Stählen, abhängig von den Legierungselementen, bei bis zu 1500°C liegen. Manuelles Zuführen von Schweißzusatz bedeutet, zusätzliches Material in den Lichtbogenbereich einzubringen, das ebenfalls aufgeschmolzen werden muss. Damit sinkt die Temperatur des Schweißbades kurzzeitig, da nun Energie für das Aufschmelzen des Zusatzwerkstoffs aufgebracht werden muss. Aus diesem Grund zieht der Schweißen den Zusatzwerkstoff, nachdem etwas davon abgeschmolzen worden ist, zurück, so dass sich das Schweißbad wieder beruhigen kann.

Das Besondere an dieser Arbeitsweise ist die Entkopplung von Stromsträrke und Schweißzusatz. Der Schweißer hat direkten Einfluss auf den Schweißstrom, kann ihn optimal einstellen und jeweils so viel Werkstoff zugeben, wie es gerade erforderlich ist. Über die Rückwärtsbewegung erhöhen sich die Kontrolle und die Handhabung über das Schweißbad.

Das Ergebnis sind sehr glatte, qualitativ hochwertige, exakte Nähte. Die schmale Wärmeeinflusszone führt zu minimalem Verzug, Anlauffarben können vermieden werden. Durch den spritzerfreien Lichtbogen sind auch keine weitergehenden Nacharbeiten notwendig. Die Nähte sind nicht verzundert und da keine Flussmittel eingesetzt werden, gibt es keine Poren und Einschlüsse.

Begrenzt wird die Schweißgeschwindigkeit insbesondere durch die handwerklichen Fähigkeiten des Schweißers. Eine Erhöhung der Schweißgeschwindigkeit kann nicht allein durch die Erhöhung des Stroms erzielt werden, sondern die regelmäßige Nachführung des Zusatzwerkstoffs verbunden mit der allzeitigen Kontrolle des Schweißbades muss gewährleistet sein.

Deswegen ist eine mechanische Zuführung des Schweißdrahtes entwickelt worden. Über eine Drahtvorschubeinheit wird der Zusatzwerkstoff kontinuierlich zum Brennerkopf und damit zum Schweißbad transportiert. So kann sich der Schweißer auf den Schweißprozess und das Schweißbad konzentrieren und muss weniger Augenmerk auf die Zuführung richten. Die Abschmelzleistung ist nur durch die im Lichtbogen zur Verfügung stehende Energie begrenzt.

Die mechanische Drahtzuführung stellt besondere Anforderungen an den Schweißbrenner - schließlich muss der Zusatzwerkstoff an die Schweißstelle gelangen. Bei modernen Schweißbrennern mit mechanischer Drahtzuführung kann die Drahtzuführung auch durch die Griffschale des Schweißbrenners mit der Wolframelektrode laufen.

Der Block, der als Führung des Zusatzwerkstoffes zur Schweißstelle dient, wird auch Support genannt. Dabei lässt sich vorteilhaft ein Winkel in zwei Achsen einstellen. So wird der Draht abhängig von den Werkstücken und der Schweißposition stets im richtigen Winkel zugeführt. Über diese Winkeleinstellung ergibt sich stets der optimale Arbeitspunkt aus dem geeigneten Höhenabstand und dem passenden Seitenabstand, der aus dem Abstand zwischen der Drahtführungsdüse zur Wolframnadel resultiert.

Trotz der Vorteile der soeben beschriebenen mechanischen Drahtzuführung gibt es auch einige Nachteile. So wird der Schweißvorgang früh unterbrochen, wenn der Schweißdraht zu kurz wird. Standardschweißdrahtstäbe weisen in der Regel eine Länge von etwa 1 m auf und müssen, sobald diese zu kurz werden, ausgetauscht werden, so dass nicht die gesamte Länge verbraucht werden kann. Weiterhin weisen durch den Griff des Schweißbrenners laufende mechanische Drahtzuführungen den Nachteil auf, dass dabei nicht die gleiche Flexibilität vorhanden ist wie bei der manuellen Zugabe des Zusatzwerkstoffes. So kann ein Vor- und Zurückziehen des Zusatzwerkstoffes bei der mechanischen Drahtzuführung nicht genauso gut auf eine Beruhigung des Schweißbades abgestimmt werden wie bei der manuellen Zugabe des Zusatzwerkstoffes.

Es wird nach einer Vermeidung der genannten Nachteile gesucht, wobei weiterhin eine präzise und genaue Drahtzugabe beim Wolframinertgasschweißen aufrechterhalten werden soll.

### Offenbarung der Erfindung

Die Erfindung schlägt einen handgehaltenen Schweißdrahthalter für die automatische Zuführung eines Schweißdrahtes, ein Verfahren zum Wolframinertgasschweißen und ein Schweißdrahtzuführungssystem gemäß den unabhängigen Patentansprüchen vor.

Vorteilhafte Ausgestaltungen ergeben sich aus den jeweiligen Unteransprüchen und der nachfolgenden Beschreibung.

### Vorteile der Erfindung

Erfindungsgemäß umfasst ein handgehaltener Schweißdrahthalter für die automatische und insbesondere steuerbare Zuführung eines Schweißdrahtes wenigstens ein Gehäuse mit wenigstens einer Durchführung für einen Draht und wenigstens einen im Gehäuse befindlichen Drahtantrieb, um den Draht durch die wenigstens eine Durchführung zu bewegen.

Im Vergleich zu dem handgehaltenen Schweißdrahthalter aus dem Stand der Technik muss der Draht nicht mehr manuell gefördert werden, da es einen im Gehäuse befindlichen Drahtantrieb gibt, mittels dessen ein Vorschub des Drahtes automatisch erfolgen kann. Dies erhöht die Präzision beim Schweißen, ist ergonomisch und reduziert die Gefahr, sich eine Verbrennung zuzuziehen.

Gleichzeitig wird im Vergleich zu einer durch einen Griff des Schweißbrenners laufenden mechanischen Schweißdrahtzuführung die gleiche Flexibilität aufrechterhalten wie bei der manuellen Schweißdrahtzuführung, da der erfindungsgemäße Schweißdrahthalter weiterhin handgehalten ist und separat von dem Schweißbrenner zugeführt oder auch weggeführt werden kann. Durch die Integration des Drathanteils in das Gehäuse ist die Flexibiltität der Handhabung des Schweißdrathhalters nochmal erhöht.

In einer vorteilhaften Ausführungsform umfasst der handgehaltene Schweißdrahthalter wenigstens eine Führungsrolle zur Führung des Drahtes. Dies ist vorteilhaft, da auf diese Weise die Durchführung des Drahtes geschmeidig und reibungsarm ist. Es ist denkbar, dass der Schweißdrahthalter zwei bis zehn Führungsrollen umfasst, bevorzugt drei bis fünf Führungsrollen.

In einer weiteren vorteilhaften Ausführungsform wird wenigstens eine der wenigstens einen Führungsrolle von dem Drahtantrieb angetrieben "Antriebsrolle". Dies ist vorteilhaft, da auf diese Weise der Drahtantrieb besonders einfach auf den Draht übertragen werden und ein Drahtvorschub bewirkt werden kann. Bevorzugt können auch zwei oder drei der wenigstens einen Führungsrolle von dem Drahtahntrieb angetrieben werden.

In einer weiteren vorteilhaften Ausführungsform umfasst der Schweißdrahthalter weiter ein Potentiometer, mittels dessen die Geschwindigkeit und/oder Vorschubrichtung des Drahtantriebs einstellbar ist. Dies ist vorteilhaft, da auf diese Weise die Flexibilität beim Schweißvorgang erhöht wird. So kann der Schweißer vorteilhaft während des Schweißens die Geschwindigkeit des Drahtvorschubes regeln, den Draht wieder zurückschieben, wenn das Schmelzbad sich beruhigen soll und so auf die unterschiedlichen Gegebenheiten während des Schweißvorganges reagieren.

In einer weiteren vorteilhaften Ausführungsform ist der Schweißdrahthalter zylinderförmig. Dies ist eine besonders handliche Form, die einfach und ergonomisch ist.

In einer weiteren vorteilhaften Ausführungsform weist der Schweißdrahthalter eine Länge zwischen 10 und 20 cm auf, bevorzugt zwischen 12 und 15 cm. Dies ist eine besonders handliche und ergonomische Länge.

In einer weiteren vorteilhaften Ausführungsform weist der Schweißdrahthalter einen Durchmesser zwischen 3 und 8 cm auf, bevorzugt zwischen 4 und 6 cm. Dies ist ein besonders handlicher und ergonomischer Durchmesser.

Es ist denkbar, dass der Schweißdrahthalter weiterhin eine Batterie oder einen Akku umfasst, der bevorzugt im Gehäuse des Schweißdrahthalters angeordnet ist. Dies ist vorteilhaft, da auf diese Weise keine aufwendige Verkabelung notwendig ist und die Stromquelle direkt am Ort des Gebrauchs angeordnet ist.

Gemäß einem weiteren Aspekt der Erfindung wird ein Verfahren zum Wolframinertgasschweißen vorgeschlagen, wobei ein geerdetes Werkstück unter Ausbildung eines Lichtbogens zu einer negativen Wolframelektrode aufgeschmolzen wird und mittels eines handgehaltenen Schweißdrahthalters, insbesondere wie oben beschrieben, ein Zusatzwerkstoff in Form eines Drahtes automatisch und steuerbar hinzugegeben wird.

Dieses Verfahren ist vorteilhaft, da getrennt von dem Schweißbrenner mittels des handgehaltenen Schweißdrahthalters der Zusatzwerkstoff flexibel, aber gleichzeitig automatisch, hinzugegeben werden kann. Dies erhöht die Präzision beim Schweißen, ist ergonomisch und reduziert die Gefahr, sich eine Verbrennung zuzuziehen.

Gemäß einem weiteren Aspekt der Erfindung wird ein Schweißdrahtzuführungssystem mit einem handgehaltenen Schweißdrahthalter, insbesondere wie oben gemäß erstem Aspekt der Erfindung beschrieben, und mit einer tragbaren Drahtrolle vorgeschlagen. Dies ist besonders vorteilhaft, da auf diese Weise nicht immer neue Schweißdrahtstäbe benutzt werden müssen, was nicht nur Arbeitszeit spart, sondern auch den Materialverbrauch für die Länge einer Schweißnaht im Vergleich zu einer mit Schweißdrahtstäben geschweißten Naht senkt.

Durch die Drahtrolle müssen Schweißdrahtstäbe nicht mehr ausgewechselt werden. Dies führt zu einer Materialeinsparung von ca. 15% gegenüber Standardschweißdrahtstäben in einer Länge von ca. 1 m. Gleichzeitig wird der Schweißdraht gleichmäßiger und kontinuierlicher zugegeben, was die Präzision beim Schweißen erhöht und die Gefahr reduziert, sich beim Schweißen eine Verbrennung zuzuziehen.

Der Schweißdrahthalter des Schweißdrahtzuführungssystems kann ein wie oben beschriebener Schweißdrahthalter sein. Alternativ ist auch denkbar, dass der Schweißdrahthalter des Schweißdrahtzuführungssystems einen externen Drahtantrieb umfasst, der nicht im Gehäuse des Schweißdrahthalters selbst angeordnet ist. Weiterhin ist denkbar, dass der Schweißdrahthalter des Schweißdrahtzuführungssystems mit dem Schweißbrenner verbunden ist.

Bevorzugt ist das Gewicht der tragbaren Drahtrolle kleiner als 5 kg. Dies ist vorteilhaft, da die Drahtrolle auf diese Weise besonders handlich ist und beispielsweise am Gürtel oder auf dem Rücken eines Schweißers befestigbar ist. Der Durchmesser der tragbaren Drahtrolle kann je nach Lieferbarkeit und/oder Verfügbarkeit der Drahtrollen variabel ausgebildet sein. Bevorzugt kann die Drahtrolle auch eine Richteinheit umfassen. Weiterhin kann der Schweißdrahthalter und/oder das Schweißdrahtzuführungssystem bevorzugt einen externen Akku umfassen. Dies ist vorteilhaft, da auf diese Weise besonders einfach und handlich eine Stromversorgung gewährleistet werden kann.

In einer vorteilhaften Ausführungsform umfasst das Schweißdrahtzuführungssystem einen den Draht zumindest zum Teil umgebenden Schlauch zwischen der tragbaren Drahtrolle und dem handgehaltenen Schweißdrahthalter. Dies ist vorteilhaft, da auf diese Weise eine Vorschubbewegung des handgehaltenen Schweißdrahthalters auf die Rolle übertragen werden kann, da der Schlauch den Abstand zwischen der tragbaren Drahtrolle und dem handgehaltenen Schweißdrahthalter aufrechterhält und den Draht isolieren kann.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einiger Ausführunsbeispiele in den Zeichnungen schematisch dargestellt und wird im Folgenden unter Bezugnahme auf die Zeichnungen beschrieben.

Kurze Beschreibung der Zeichnungen
- Fig. 1: zeigt eine Querschnittsansicht eines erfindungsgemäßen handgehaltenen Schweißdrahthalters in Längsschnitt
- Fig. 2: zeigt eine Querschnittsansicht eines erfindungsgemäßen Schweißdrahtzuführungssystems in Längsschnitt
- Fig. 3: zeigt einen Schweißbrenner während des Wolframinertgasschweißens.

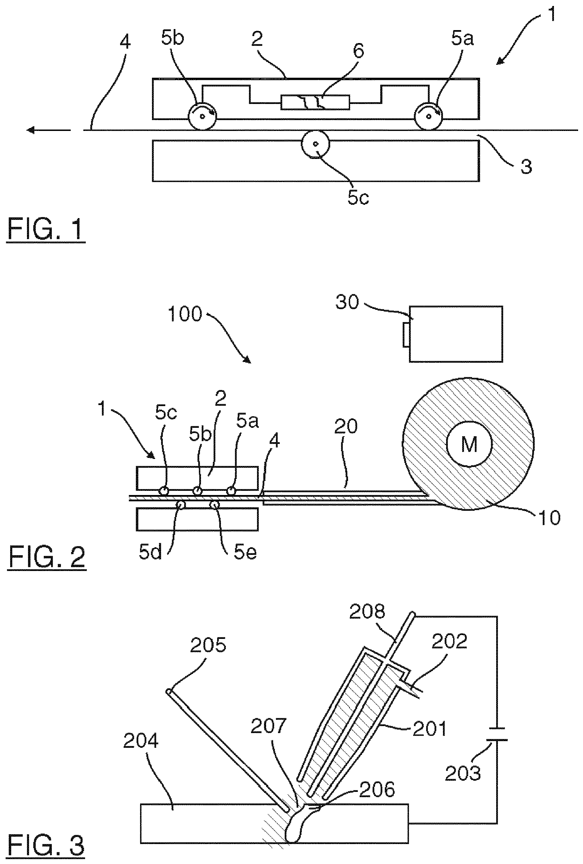

In Fig. 1 ist eine Querschnittsansicht einer Ausführungsform eines erfindungsgemäßen handgehaltenen Schweißdrahthalters 1 dargestellt. Der Schweißdrahthalter 1 weist ein Gehäuse 2 mit einer Durchführung 3 für einen Draht 4 auf und einen im Gehäuse befindlichen Drahtantrieb (nicht gezeigt), um den Draht 4 durch die Durchführung 3 zu bewegen. Der Schweißdrahthalter 1 umfasst drei Führungsrollen 5a, 5b, 5c zur Führung des Drahtes 4. Zwei 5a, 5b der drei Führungsrollen 5a, 5b, 5c werden von dem Drahtantrieb angetrieben "Antriebsrollen". Der Schweißdrahthalter 1 umfasst ferner eine Batterie 6, mittels der der Drahtantrieb mit Energie versorgt wird.
In Fig. 2 ist eine Querschnittsansicht einer Ausführungsform eines erfindungsgemäßen Schweißdrahtzuführungssystems 100 dargestellt. Das Schweißdrahtzuführungssystem 100 umfasst einen handgehaltenen Schweißdrahthalter 1 und eine tragbaren Drahtrolle 10. Das Schweißdrahtzuführungssystem umfasst ferner einen den Draht umgebenden Schlauch 20 zwischen der tragbaren Drahtrolle 10 und dem handgehaltenen Schweißdrahthalter 1. Weiterhin ist ein externer Akku 30 dargestellt, mittels dessen der Drahtantrieb mit Strom versorgt wird. In diesem Fall umfasst der Schweißdrahthalter 1 fünf Führungsrollen 5a, 5b, 5c, 5d, 5e, von denen zwei Antriebsrollen darstellen.

In Fig. 3 ist ein Schweißbrenner 201 während des Wolframinertgasschweißens dargestellt. Der Schweißbrenner 201 umfasst eine Inertgaszufuhr 202, die Inertgas in das Innere des Schweißbrenners leitet und von dort durch eine Düse auf ein Werkstück 204. In der Mitte des Schweißbrenners 201 wird eine nicht abschmelzende Wolframelektrode 208 geführt, die ein Ende an der Stelle aufweist, an der das Inertgas auf das Werkstück trifft. Wenn mittels einer Stromquelle 203 eine Spannung zwischen der Elektrode 208 und dem Werkstück 204 angelegt wird, wobei der Minuspol an der Wolframelektrode 208 anliegt, wird über das Inertgas ein Lichtbogen 207 zwischen der Wolframelektrode 208 und dem Werkstück 204 erzeugt. In dem Lichtbogen 207 schmilzt das Werkstück 204 teilweise auf und bildet ein Schmelzbad 206. Mittels eines erfindungsgemäßen handgehaltenen Schweißdrahthalters (nicht gezeigt) wird nun ein Draht 205 zu der Schweißstelle zugeführt, der ebenfalls im Lichtbogen 207 aufschmilzt und sich als Zusatzwerkstoff mit dem Schmelzbad 206 des Werkstückes 204 verbindet.

## Patentansprüche

1. Handgehaltener Schweißdrahthalter (1) für die automatische Zuführung eines Schweißdrahtes (4), umfassend wenigstens ein Gehäuse (2) mit wenigstens einer Durchführung (3) für einen Draht (4) und wenigstens einen im Gehäuse (2) befindlichen Drahtantrieb, um den Draht (4) durch die wenigstens eine Durchführung (3) zu bewegen.

2. Schweißdrahthalter (1) nach Anspruch 1, weiter umfassend wenigstens eine Führungsrolle (5a, 5b, 5c, 5d, 5e) zur Führung des Drahtes.

3. Schweißdrahthalter (1) nach Anspruch 2, wobei wenigstens eine (5a, 5b) der wenigstens einen Führungsrolle (5a, 5b, 5c, 5d, 5e) von dem Drahtantrieb angetrieben wird.

4. Schweißdrahthalter (1) nach einem der vorstehenden Ansprüche, weiter umfassend ein Potentiometer, mittels dessen die Geschwindigkeit und/oder Vorschubrichtung des Drahtantriebs einstellbar ist.

5. Schweißdrahthalter (1) nach einem der vorstehenden Ansprüche, der zylinderförmig ist.

6. Schweißdrahthalter (1) nach Anspruch 5, der eine Länge zwischen 10 und 20 cm aufweist.

7. Schweißdrahthalter (1) nach einem der Ansprüche 5 und 6, der einen Durchmesser zwischen 3 und 8 cm aufweist.

8. Verfahren zum Wolframinertgasschweißen, wobei ein geerdetes Werkstück (204) unter Ausbildung eines Lichtbogens (207) zu einer negativen Wolframelektrode (208) aufgeschmolzen wird und mittels eines handgehaltenen Schweißdrahthalters (1) nach einem der Ansprüche 1 bis 7 ein Zusatzwerkstoff in Form eines Drahtes (4, 205) automatisch hinzugegeben wird.

9. Schweißdrahtzuführungssystem (100) mit einem handgehaltenen Schweißdrahthalter (1) insbesondere nach einem der Ansprüche 1-7 und mit einer tragbaren Drahtrolle (10).

10. Schweißdrahtzuführungssystem nach Anspruch 9, ferner mit einem den Draht (4) zumindest zum Teil umgebenden Schlauch (20) zwischen der tragbaren Drahtrolle (10) und dem handgehaltenen Schweißdrahthalter (1).
